# EUROPEAN PATENT SPECIFICATION

(11) **EP 4 118 449 B1**
(45) Date of publication and mention of the grant of the patent: **17.07.2024**
(21) Application number: 20710482.9
(22) Date of filing: 09.03.2020
(51) Int. Cl.: G01S 5/16, G06T 7/55, G06T 7/593, G06T 7/70

(54) **METHOD, COMMUNICATION DEVICE, COMPUTER PROGRAM AND COMPUTER PROGRAM PRODUCT FOR POSITIONING ESTIMATION**
VERFAHREN, KOMMUNIKATIONSVORRICHTUNG, COMPUTERPROGRAMM UND COMPUTERPROGRAMMPRODUKT ZUR POSITIONSSCHÄTZUNG
PROCÉDÉ, DISPOSITIF DE COMMUNICATION, PROGRAMME D'ORDINATEUR ET PRODUIT PROGRAMME D'ORDINATEUR D'ESTIMATION DE POSITION

(43) Date of publication of application: 18.01.2023
(73) Proprietor: Telefonaktiebolaget LM ERICSSON (PUBL), 16483 Stockholm (SE)
(72) Inventor: ÖKVIST, Peter, 973 41 LULEÅ (SE); ARNGREN, Tommy, 954 42 SÖDRA SUNDERBY (SE); PETTERSSON, Jonas, 975 92 LULEÅ (SE); HEDMAN, Peter, 16244 VÄLLINGBY (SE)
(74) Representative: Ericsson
(86) International application number: PCT/EP2020/056150
(87) International publication number: WO 2021/180296

(56) References cited:
- WO-A1-2020/015810
- US-A1- 2008 157 970
- US-A1- 2015 345 907
- US-B1- 8 577 604

## Description

### Technical Field

A method for estimating a position of a point of interest and a communication device on which the method can be executed, along with a computer program, a computer program product and a carrier containing the computer program, is suggested.

### Background

Today an app, referred to as the 112-app", adapted to offer fast, relevant and reliable information when a person is calling SOS alarm, i.e. the national Swedish emergency call center, is available in Sweden. The mobile phone of the person that is calling 112 via the mentioned app is automatically transmitting the position of the phone to SOS alarm, thereby simplifying localization of the calling party, even in a very stressful situation, where spoken information may be difficult to identify and comprehend, and where SOS alarm do not have the possibility of activating and applying any positioning of a calling party of their own. However, the suggested app is only useful when the person in distress and the calling person are at the same location. In a scenario where a person is recognizing another person in distress from a distance, such as e.g. when a person located on the bottom of a valley in an alpine area recognizes a climber, practicing mountain climbing, is found to be in an emergency situation, and places a call to an emergency call center, where the distance between the two persons may be as far as several kilometers, it may be very difficult for the calling person to provide an accurate geographical position. The situation may be especially critical if the person calling the emergency call center is not at all familiar with the area. US2015345907 discloses a targeting system where a spherical omni-directional depth stereoscopic multi-lens camera, a radar (e.g., LIDAR), and microphone identify, detect, and determine target positions and bearings, detect target weapon flash, detect glint, track bullet trajectory, coordinate, track, share, and assign targets. Target bearings and ranges are determined by sound and heat signature detection from an infrared camera, from glint.

### Summary

The invention is defined by the subject-matter of the claims.

According to claim 1, a method for estimating a geographical position of a point of interest is suggested. By applying the suggested method, where a geographical position estimate is derived based on data provided from a plurality of communication devices, a more accurate estimate can be acquired.

According to claim 2, a communication device, capable of estimating a geographical position of a point of interest is suggested.

According to claim 16, a computer program for controlling a communication device, capable of estimating a geographical position of a point of interest, is suggested.

According to claim 17, a computer program product comprising a computer program, such as the one mentioned above and a computer readable storage medium on which the computer program is stored, is suggested. According to claim 18, a carrier containing the suggested computer program is suggested, wherein the carrier is one of an electronic signal, an optical signal, a radio signal, and a computer readable storage medium.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### Brief Description of the Drawings

For a better understanding of examples of the present disclosure, and to show more clearly how the examples may be carried into effect, reference will now be made, by way of example only, to the following drawings in which:
Figure 1 is an illustration of a person who is activating an estimation of a geographical position of a point of interest with the help of a communication device.
Figure 2 is an illustration of a plurality of communication devices, involved in the estimation process illustrated in Fig. 1, where the estimate of the geographical position is the result of a combination of data provided from a plurality of communication devices.
Figure 3a is a flow chart illustrating a method for estimating a geographical position of a point of interest, according to one embodiment.
Figure 3b is another flow chart, illustrating a method for estimating a geographical point of interest, according to another embodiment.
Figure 3c is another flow chart, illustrating method steps for repeating the steps of Fig. 3b.
Figure 4 is a signalling scheme, illustrating how a first communication device, a server and a second communication device can interact when a geographical position is estimated, according to one embodiment.
Figure 5 is a signalling scheme, illustrating how a first communication device, a server and a second communication device can interact when a geographical position is estimated, according to another embodiment.
Figure 6 is yet another signalling scheme, illustrating how a first communication device, a server and a second communication device can interact when a geographical position is estimated, according to yet another embodiment.
Figure 7a is illustrating an example of a view of a user where a picture comprises a representation of the environment on which an area of interest has been overlaid.
Figure 7b is illustrating an example of another view of a user where a picture comprises a representation of the environment on which two areas of interest has been overlaid.
Figure 8a is a block scheme, illustrating a communication device, according to one embodiment.
Figure 8b is another block scheme, illustrating a communication device, according to another embodiment.
Figure 9a is a block scheme, illustrating a server, according to one embodiment.
Figure 9b is another block scheme, illustrating a server, according to another embodiment.
Figure 10a is an illustration of a UAV, about to identify an object of interest from a first altitude.
Figure 10b is an illustration of a UAV, about to identify an object of interest from a second altitude, higher than the first altitude.

### Detailed Description

In order to enable for a user of a communication device to identify and determine a position of a person, an animal or an item, also referred to as an object, or an object of interest, that appears to be involved in an incident and to be in need of attention from e.g. rescue or security personal, a method is suggested which allows the user to trigger a procedure where a plurality of communication devices are selected so that they, in an efficient way, can contribute when a geographical position of the identified object is to be estimated. The mentioned procedure is typically executed in association with the user making a call to a rescue emergency center, where the ability to provide a reliable and correct geographical position delivered to the rescue emergency center can be a matter of life and death.

The mentioned identified object is represented on an image, in the form of a point of interest or a marker, by a user or an automated process. Consequently, whereas an object of interest is an object that can be identified by a user when watching a scenery in the real world, a point of interest is a representation of the object of interest, pointed out by a user a digital image of the watched scenery.

Estimations based on data provided from a plurality of communication devices can be aggregated to form an area of interest, where the area of interest is defining an area circumventing the acquired points of interest, and a level of uncertainty of the estimated geographical position. An area of interest is particularly relevant when the suggested process has been repeated, so that a number of point of interests, all having different levels of precision, can be considered and combined.

The suggested estimations refer first to an estimation of a relative distance between a first communication device, which may be, but does not have to be the initiator of the suggested method, who may also typically be referred to as a caller, initiating a call, in association with initiating the suggested estimation method and identifying a point of interest. Based on the first estimated relative distance and the estimated direction, together with additional estimated distances and directions, provided from one or more additional communication devices, a geographical position is estimated. By repeating the mentioned process, identified points of interest, and, consequently also an area of interest, may gradually become more and more precise and accurate. The described process may also be repeated so that a plurality of areas of interest are identified and gradually decreased, by repeating the process.

A communication device capable of providing data which can be used for the mentioned estimates may be any type of device, typically comprising a digital camera, where the device is capable of communicating with additional communication devices and/or a server or any other type of network node, via a communication network, which may e.g. be any type of 2G, 3G, 4G, 5G or 6G communication network. Alternatively, some or all of the communication devices may be capable of communicating with each other via device to device (D2D) communication, or as a combination of D2D with communication via a communication network. More specifically a communication device, as disclosed herein, may e.g. be any of a a smartphone or a pad. Alternatively, the communication device may form part of or comprise any type of digital surveillance camera or an Unmanned Aerial Vehicle, UAV, provided with connectivity capabilities. The communication device may alternatively be, or form part of, a network node, such as e.g. a server, with which communication devices can communicate, in order to provide data, useful for estimation of a geographical position.

A digital surveillance camera may e.g. be placed so that it is surveilling a specified area of an industrial property, a public place or a selected section of a road where, in case of an incident, it is triggered, either automatically by detecting means of the digital surveillance camera, such as e.g. motion detection, or manually by an operator surveilling the camera. Other communication devices located so that the object of interest can be identified also from their location can cooperate with the digital surveillance camera in estimating a geographical position at an identified point of interest by applying the suggested method.

According to another embodiment, a UAV may be patrolling over a vast geographical area when an object of interest, such as a forest fire, is identified in an image captured by a digital camera of the UAV, after which the UAV may trigger a process where other flying or ground based communication devices may be requested to assist with further estimates. The object of interest may have been identified automatically by the UAV, e.g. by heat detection, in case the UAV is searching for forest fires, or manually by an operator of the UAV surveilling photographs or a video, captured by a digital camera of the UAV.

The object of interest has already been exemplified above as indicating a place of a person, such as e.g. a mountain climber who has ended up in an emergency situation, but may alternatively refer to e.g. a distressed person at sea, a person involved in a car or train accident or a person about to be attacked and robbed or harassed. The object of interest does however not have to refer to a person, but can also, in addition to a forest fire, refer to e.g. an item that has fallen from a lorry, or any other item for which an incident has occurred which may be identified by a person having a communication device and having sufficient eye of sight to be able to spot the object of interest so that estimates can be initiated by making use of one or more digital images available to the communication device.

The estimation of the geographical position is executed by first estimating a relative distance between a communication device, from herein after referred to as a first communication device, which has initiated the mentioned process, and a marked point of interest. The mentioned estimation process may be executed either prior to calling for assistance at e.g. a dedicated call center, during the call or after the call has been completed but not yet terminated. Once the first communication device has initiated the estimation process, and acquired a digital image, where a point of interest has been marked, one or more additional communication devices, which are located so that it is expected that the object of interest can be detected, are made aware of the situation, so that they can provide additional, complementary data, comprising additional images with a marked point of interest also from their respective positions. The first communication device may contribute with estimated distance and direction on its own, or it may acquire such estimates from another communication device, after which the acquired estimates can be used accordingly, for estimating a geographical position.

More specifically, a user or an autonomous device, capable of identifying a certain incident on a digital image, will be able to place a marker defining a point of interest the image, covering the geographical area where the respective incident has been identified. By selecting potential communication devices and/or by combining data provided from different communication devices in a smart way, the final estimation of a geographical position may be more precise and reliable, compared to if only the communication device, from which the method was initiated, contributes with data.

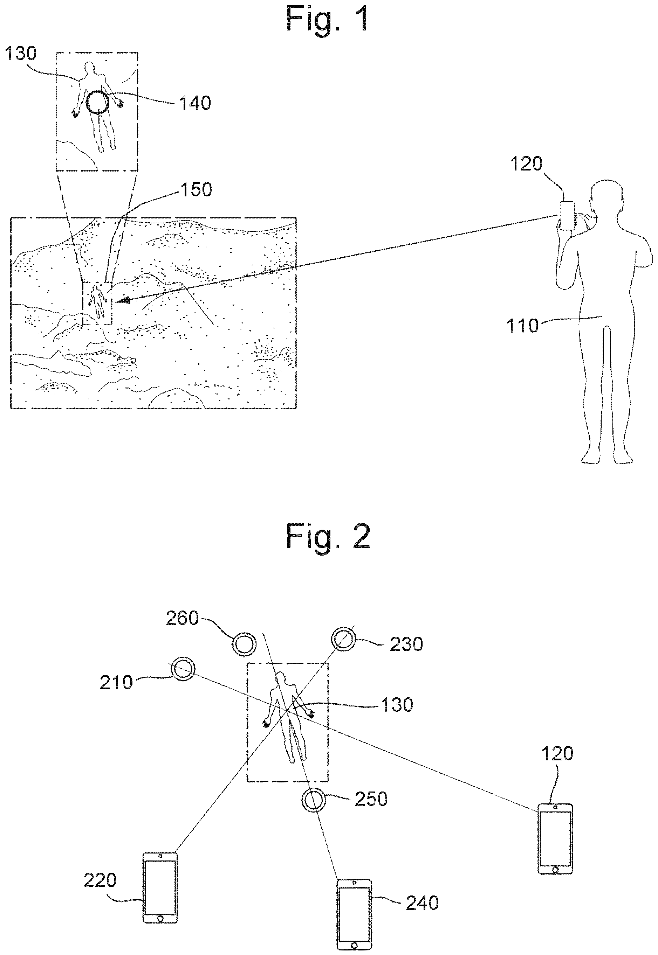

Fig. 1 is illustrating a scenario where a user 110, holding a communication device 120, such as e.g. a smartphone, has spotted an incident, involving a person in distress 130, occurring at a significant distance from the user 110. By activating a digital camera (not shown) of the communication device 120 and pointing it in the direction of the person in distress 130, or the object of interest, the user 110 is able to initiate the suggested position estimation process by activating an app or a function of the smartphone, available via a specific subscription and to capture the person in distress 130 on a digital photo. By marking the person in distress 130 on the photo with a digital marker 140, e.g. by touching the display or by using a navigation tool of the app or function, the initiated process will be capable of estimating a relative distance between the user 110 and the person in distress 130, or more specifically the motive of the photo that has been identified as a point of interest and indicated with a marker 140, and a direction from the communication device120 to the marker of the point of interest.

To correctly make an estimate of a relative distance, using only one communication device, may be challenging, especially if the location of an object of interest is remote from the communication device. A more accurate estimate may however be obtained if a plurality of estimates, provided from distributed communication devices, are combined. However, a plurality of communication devices, located within a very narrow angle in relation to an object of interest may still result in an inaccurate estimate of the relative geographical position also if results from a plurality of communication devices are combined. For this reason, also the selection from available communication devices may have a significant effect on the final outcome of an estimation of a geographical position.

Fig. 2 is illustrating a scenario where the mechanism described above is combined, involving a plurality of, more or less, evenly distributed communication devices 120, 220, 240, each being capable of providing relative distance and direction estimates of varying accuracy. A user of a first communication device 120 has recognized a person in distress 130, and has initiated an estimation process, such as the one described above, where the estimated, distance and direction in relation to communication device 120 is indicated as a geographical position 210. When the user of the first communication device 120 has initiated estimations of a relative distance and direction a search for other communication devices which are capable of participating in the geographical estimation is also initiated. Communication devices 220, 240 are determined as potential candidates, where communication device 220 estimates a relative distance and direction, indicated as geographical position 230 and communication device 240 estimates a relative distance and direction which is indicated as geographical position 250. By calculating an average of the acquired geographical positions 210, 230, 250, estimated geographical position 260 can be acquired as an estimate of the geographical location of the person in distress 130.

As will be described herein, filtering of communication devices from which to request data may be executed at an early stage, i.e. data is only acquired from selected communication devices. Data provided from various communication devices to be used for estimating a geographical position may also, or alternatively, be filtered out at a later stage of the process, such that e.g. data is acquired from all contributors, whereas data, considered to be most relevant or more accurate, is later filtered out from some of the contributors, in order to enhance the quality of the estimations.

In a situation with a large number of communication devices, encircling an object of interest, where each communication device is providing relevant data, a plurality of data sets, may be determined, where an estimate of a final geographical position is determined as an average value from the geographical position estimates.

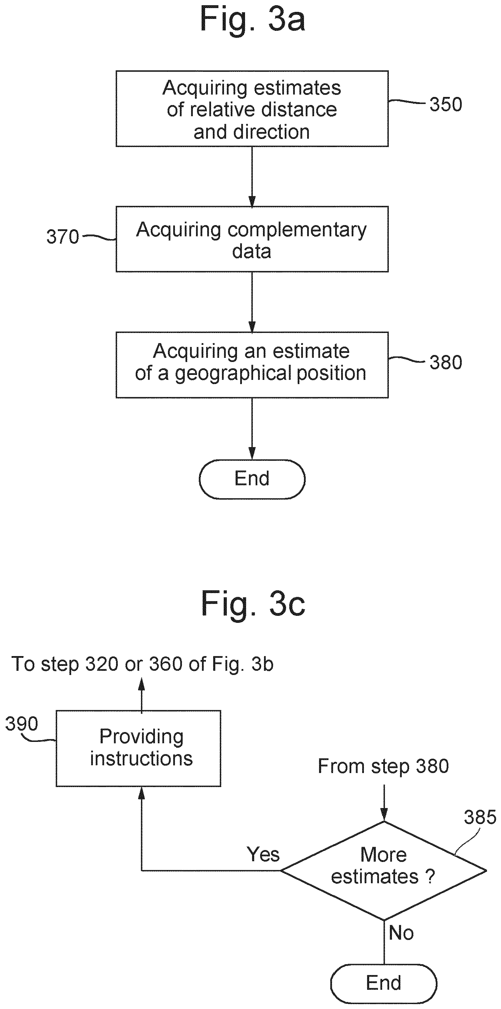

A method for estimating a geographical position based on data provided from a plurality of communication devices is illustrated in the flow chart of Fig. 3a, where the method may be executed either in an entity which may be a communication device, here referred to as a first communication device, connected to a network, or a network node of a communication network, such as e.g. a server, capable of connecting to communication devices, from which relative distances and directions can be acquired. Consequently, the method is executed in one of the communication devices, from which data, contributing to the estimation of the geographical position, is provided, or in a network node, to which communication devices contributing to the estimation have access.

In a first step 350 of Fig 3a, estimates of a first relative distance between, and a direction from a first communication device to a point of interest are acquired. These estimates are based on a marked object of a digital image. The digital image may be a digital photo, which the user of the first communication device has taken when pointing a digital camera of the first communication device towards the area of e.g. a person in distress, or which has been acquired from another communication device, and where the point of interest has been marked on the digital photo. Alternatively, the digital image may be a digital map, acquired by the first communication device, on which a point of interest has been marked.

In another step 370, complementary data, comprising an additional estimated relative distance and direction, or data from which these estimates can be derived, are acquired from one or more suitable, additional communication devices. The complementary data is acquired from one or more communication devices that has/have been determined based on at least the previously estimated relative distance and direction, i.e. based on the first estimates, suitable located second communication devices can be determined. The determination of one or more additional communication devices may be executed at the mentioned entity itself or at another entity to which the mentioned entity has access, such as e.g. a cloud-based entity or another network node, capable of assisting in the execution of the suggested method.

In a further step 380, an estimate of a geographical position of the object of interest, or, more specifically the point of interest, is acquired, where such an estimate is based on a combination of the estimates of the first relative distance and direction, and the acquired complementary data, i.e. estimates of, or associated with, relative distances and directions acquired from one or more further communication devices.

A geographical estimate may be based on all available estimates and data, provided from all available communication devices, or estimates and data may be selectively chosen and combined, based on one or more criteria, which may e.g. comprise one or more of: photo quality, such that e.g. only the photos with highest quality and or format and thereby best chances of providing reliable estimates are chosen. Alternatively, or in a combination, estimates and data provided from communication devices evenly spread around an object of interest may be chosen.

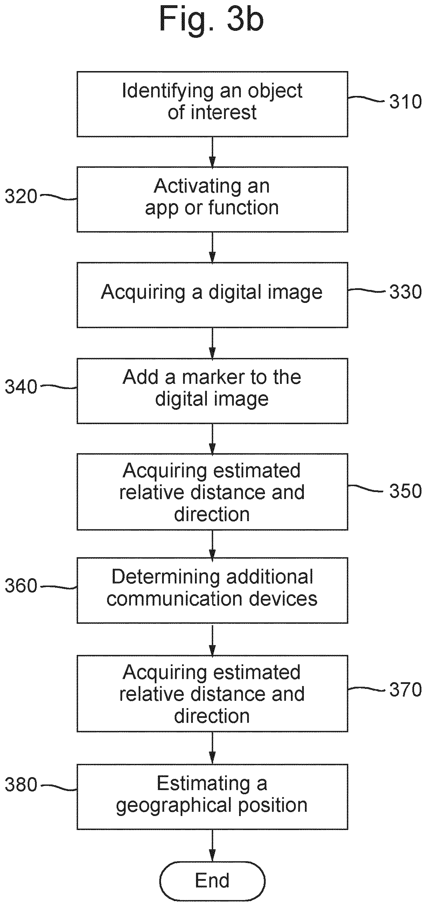

The method described above may be applied in a context such as the one presented in the flow chart of Fig. 3b. In a first step 310 of Fig. 3b, an object of interest is identified by the user, i.e. an incident can be seen from the position where the user of a communication device is located. In a next step 320, an app or function, capable of estimating a geographical position based on data from a plurality of communication devices, as suggested herein, is activated on the communication device by the user. Typically, such an activation is done because the user of the communication device has come to the conclusion that a geographical position of an object of interest need to be estimated. Such an activation may alternatively be executed in association with a user making a call to an appropriate call center. Alternatively, steps 310 and 320 are executed in the opposite order, i.e. the user of the communication device may have heard about an incident and activates the relevant app before actually spotting the object of interest.

As indicated with another step 330, the user is acquiring a digital image , which comprises, or covers the identified object of interest, on a display of the communication device, where this may be achieved by capturing a digital photo with a digital camera of the communication device, or by acquiring a digital map of the relevant area, and in another step 340, the user is adding a marker to the digital image, which is indicating where the user has spotted the incident, i.e. the object of interest, on the digital image. Alternatively, a combination of a digital photo and a digital map may be applied so that the user is able to mark two images as accurate as possible. Based on the data content of the image, estimates of the relative distance and direction are acquired, as indicated with step 350. The actual processing of the data acquired from the digital image may again be executed by the entity itself or by another entity, which may e.g. have more processing power and/or in order to save battery power at the communication device.

As indicated with another step 360, one or more additional communication devices, considered as potential contributors of relevant data for the estimate of the geographical position are determined, where such a determination is based on the already available estimates, typically in combination with further data. Complementary data is then acquired from the one or more determined communication devices, which are able and willing to provide such data, as indicated with step 370, and in another step 380, a geographical position is estimated, based on the acquired estimates and possibly also further data, acquired e.g. from sensors of the communication devices.

It is to be understood that, as indicated above, estimates may be based on data acquired from a digital photo or a digital map or a combination of both, but that some estimates from some communication devices, may have been derived from a digital photo, whereas other estimates from other communication devices may have been derived from a digital map, e.g. due to different conditions for different communication devices and/or for different users.

If the estimated geographical position is considered adequate, the suggested method is terminated after step 380, whereas parts of the suggested method may instead be repeated if more data is required, e.g. due to that the provided estimates seems unreliable and uncertain. Such a determination, which is indicated by step 385 of Fig. 3c, showing a continuation from step 380 of Fig. 3b, may be done automatically, or manually, e.g. by an operator of a rescue emergency center. If more estimates of relative distance and direction are used, upcoming estimates of a geographical position may include determining of an area of interest, indicating how acquired geographical positions are spread over a digital image. If the method is repeated , instructions can be provided to the relevant one or more communication devices, as indicated with step 390 of Fig. 3c, expressing a possible continuation of the method as disclosed in Fig. 3b, and the suggested method can be repeated from step 320 of Fig. 3b, in case further data is required from the communication device that initiated the mentioned process, or from step 360of Fig. 3b, in case complementary data is required from any determined communication device. More specifically, written instructions may be provided to one or more communication devices, instructing a user e.g. to amend or adapt one or more parameters of the digital camera of a respective communication device and/or parameters of the communication device, which may have impact on the quality of the data provided from the respective communication device, such as e.g. the quality of the digital photo. Alternatively, or in addition, instructions may instruct a user of a communication device to move along a certain predefined pattern when acquiring estimates and data, where the data may rely e.g. on one or more of geographical direction, altitude and angle. If an area of interest has been determined in step 380, this area will typically be provided to communication devices in the instructions, in subsequent step 390. In case the communication device is e.g. an autonomous or semi-autonomous device, such as e.g. a UAV, the instructions may be computer readable instructions, controlling the autonomous or semi-autonomous device to act according to the instructions.

Once the app or function has been activated, some or all of the following steps, presented in more detail below, may appear sequentially to the user or the device, instructing the user of the device to execute the respective actions, or some or all of the following step may be executed automatically, only instructing the user how to provide for some required prerequisites, such as e.g. instructing the user to point the digital camera towards the point of interest and/or to verify that a correct point of interest has been inserted into an digital photo, e.g. by comparing the outcome of the estimate with other acquired estimates.

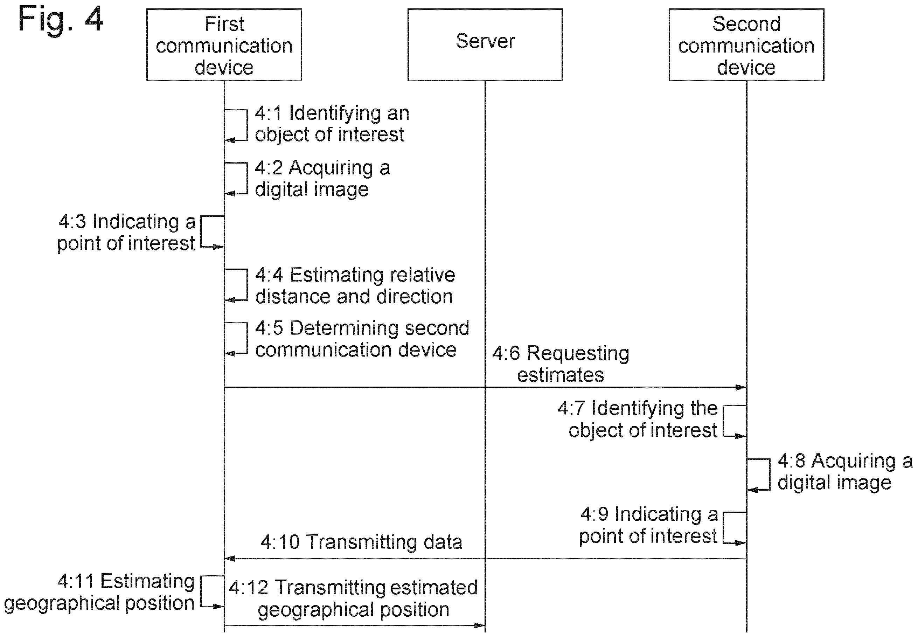

According to one embodiment, the suggested method is initiated at a communication device, again referred to as a first communication device. According to this embodiment, illustrated in the signalling scheme of Fig. 4, the method is executed by the first communication device, with the exception of the assistance, provided by one or more other communication devices, here illustrated as a second or additional communication device. Alternatively, also another functional entity, here referred to as a server, may assist the first communication device in the execution of steps of the suggested estimation method. According to the figure, the estimate of the geographical position is also provided to the server for use by that entity.

Server is here to be interpreted as a functional entity which is capable of executing one or more steps of the method as disclosed herein. Such a server may be under the control of, and/or forming part of, an emergency or security call center, or any other center where an estimate of a geographical position of some kind of incident may be required. Alternatively, the server may be a cloud server, an edge server, or a server forming part of an autonomous vehicle, such as e.g. a UAV. Although not explicitly indicated in the figure, the method requires that an app or function, adapted to estimate the relative distance and direction is activated at an early stage of the described process.

In a first step 4:1 a user recognizes an incident which, according to the user, calls for an estimation of a geographical position, i.e. an object of interest is identified. Once the user has determined that a geographical position of an identified object of interest needs to be estimated, a digital image is acquired e, as indicated with step 4:2. On the digital image the user indicates a point of interest, i.e. a point in the digital image where the incident has been identified, as indicated with another step 4:3. Based at least on the data of the digital image, a relative direction and a distance between the first communication device and the point of interest are estimated, as indicated in step 4:4. In addition to the data of the digital image, available additional data can be used in the estimation process. In association with executing the suggested estimation, the user typically also calls an emergency or security call center for calling the attention to relevant personal, such as e.g. security or medical personal.

The app or function mentioned above may be provided by the emergency or security call center, such that users of communication devices which are connected to the app or function can cooperate whenever the users have sufficiently clear site from their location to a point of interest.

Once the first communication device has provided a first set of estimates, it initiates a process for determining one or more additional communication devices, in the figure referred to as a second communication device, which may be able to provide additional data, which can be used for obtaining an enhanced estimate of the geographical position. Such a determination is indicated with step 4:5 and can be executed based on various criteria. According to one embodiment the first communication device has, or has access to, stored data on potential candidate devices, which may be retrieved e.g. from an address book of the user. Alternatively, the first communication device is capable of determining potential candidate devices based on available data, such a e.g. positioning data. Alternatively, although not shown in Fig. 4, the first communication device requests assistance from a communication network node, such as e.g. the server of Fig. 4, where the server may be able to determine and/or send out requests to communication devices, e.g. by selecting communication devices which potentially can provide relevant data and which are determined to be located in a distributed manner around the object of interest.

A request may be generated automatically or semi-automatically at the communication device, and may, in addition to the estimated relative distance and direction, also comprise some keywords, such as e.g. "alpine accident", "two persons", provided by the user of the first communication device, by an operator of an emergency rescue center, or answers to questions presented to the user of the first communication device. Such questions and answers may e.g. look as follows:
What kind of incident has been identified ? alpine incident
How many persons are involved ? two

Such a request is a indicated in step 4:6. Alternatively, or in addition, such a request is instead sent to the server, so that the server can manage the requests and forward the request to the respective second communication devices via a communication network. Alternatively, the first communication device, capable of D2D communication may e.g. request some communication devices, located within range of the first communication device to provide data, whereas more distantly located communication devices may be requested via the server and the communication network. The request comprises some indication of the actual situation and the object of interest. In its simplest form the message is a text message describing an estimated geographical position, expressed as a longitude and a latitude and possibly also the actual situation in plain text. Such a request may e.g. have the following format:
An alpine incident which appears to involve two injured persons has been identified at position 41°24'12.2"N 2°10'26.5"E. Are you able to see this incident ?

Although not explicitly shown in the figure, if the user answers affirmative to a question, comprised in step 4:6, or in a separate message, the step may be followed by further steps for exchange of data, instructing the user on how to act, such as e.g.:
Point your camera in the indicated direction, take a photo, mark the place of the incident on the photo at accurate as possible and transmit the photo.
   or
Mark the indicated place of the incident at the received map as accurate as possible and transmit the map

Typically, step 4:6 comprise an original photo, parts of an original photo, a digital map, or a combination of both, together with the text message, thereby simplifying for the user to locate the incident, especially if the person is unfamiliar with the area. Furthermore, Augmented Reality (AR) functionality may be used for illustrating the scenario of the incident to the user e.g. in the form of a 3D map, in order to further enhance the possibility for the user to provide most accurate estimates.

If the object of interest, indicated as a point of interest in a request can be seen by a user of the second communication device, as indicated with step 4:7, the user acquires a digital image , using the second communication device, as indicated with step 4:8, and a point of interest is marked by the user of the second communication device on the newly taken digital photo, on the acquired digital map or on both, as indicated with step 4:9, before the data, including the marked digital image or images, possibly in combination with other data, is transmitted to the first communication device directly, or via the communication network, e.g. via the server, as indicated with step 4:10.

If more than one additional communication device is determined at step 4:5, steps 4:6 to 4:10 will be repeated for each of these additional communication devices. Based on available data, the first communication device will be able to estimate a geographical position by combining all or some of the available data, as indicated with step 4:11. As indicated above, a first estimate may be generated, based on available data, after which steps 4:6 - 4:10 are repeated, but with specific instructions, thereby creating further opportunities to acquire complementary data from the available communication devices, and thus a more accurate estimate. Once an appropriate estimate of the geographical position of the point of interest has been acquired, it can be used as an indication of the geographical position of the point of interest and the object of interest. Typically the estimate is transmitted to another entity, such as e.g. the server mentioned above, as indicated with step 4:12. The method as suggested above with reference to Fig. 4, where basically the whole method is executed in the same device as the one used for initiating the method, may e.g. be applied by a group of people having devices, capable of direct communication, or when the first communication device is a UAV with device-to-device capabilities.

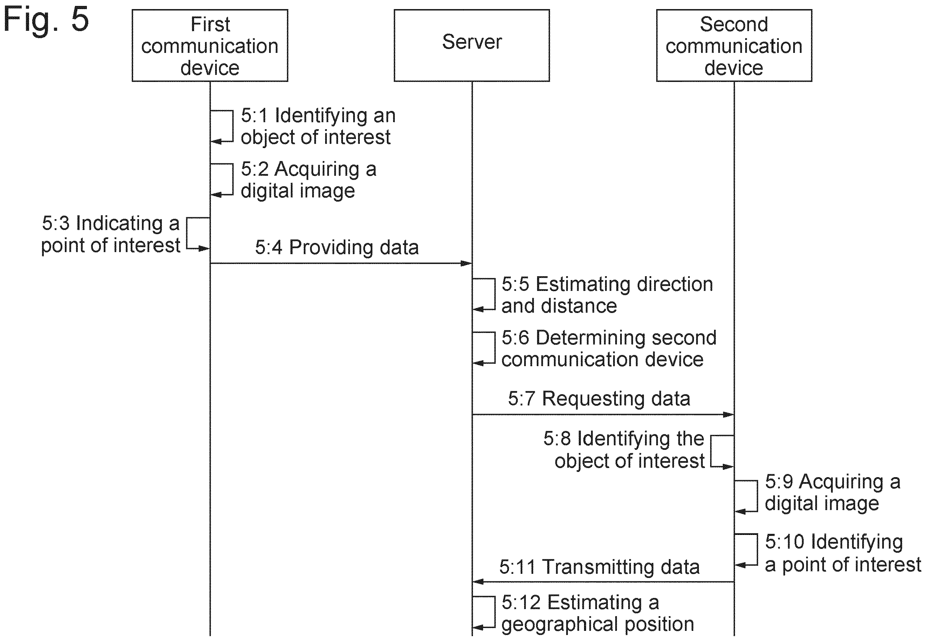

However, in many situations it may be very power consuming to have all steps of the suggested method executed at a mobile communication device. In another scenario, which is illustrated in Fig. 5, most of the method steps are therefore instead executed by a server to which communication devices have access via a communication network. Similarly, to steps 4:1 - 4:3 of Fig. 4, a user is detecting an incident, acquires an image of the scene of the incident, in the form of a digital photo a digital map or both, and marks a point of interest on the image or images, as indicated with steps 5:1 - 5:3, respectively.

In a subsequent step, the data associated with the digital image is provided to the server, as indicated with step 5:4, for further processing of the method at, or under control of the server. According to figure 5, the data is provided to the server, where the acquired data is used for estimating the relative distance and direction by the server, as indicated with step 5:5.

Based on the estimates, possibly in combination with other data, sensed by the communication device and/or entered via a GUI of the first communication device by the user of the communication device, and provided from the first communication device, an additional communication device is determined by the server, as indicated with step 5:6.

Once an additional communication device has been determined by the server, it requests data from this communication device, as indicated by step 5:7. Although not indicated in the figure, such requests may be transmitted via other functional entities, connected to the server, such as e.g. an access node of a communication network, a UAV, capable of acting as an access node, permanently or temporary, or any other node, capable of providing access functionality. If a user of a determined communication device, here a second communication device, or the device itself, detects the object of interest and the requested incident, as indicated with step 5:8, the user of the second communication device acquires a digital image , as indicated with step 5:9, and marks a point of interest, as indicated with step 5:10. In addition, the second communication device may collect further data via sensors of the device and/or the user may enter further data via a GUI of the device. Such additional data may be provided according to predefined procedures of the second communication device, or upon request, determined at the first communication device.

In a next step 5:11 the data acquired by the second communication device is provided to the server, so that the server can use the acquired data for estimating a geographical position, as indicated with step 5:12.

The scenario described above with reference to fig. 5 can preferably be used in a network node of, or connected to, a communication network, such as e.g. a server, where it is likely that the communication devices will be able to access the server.

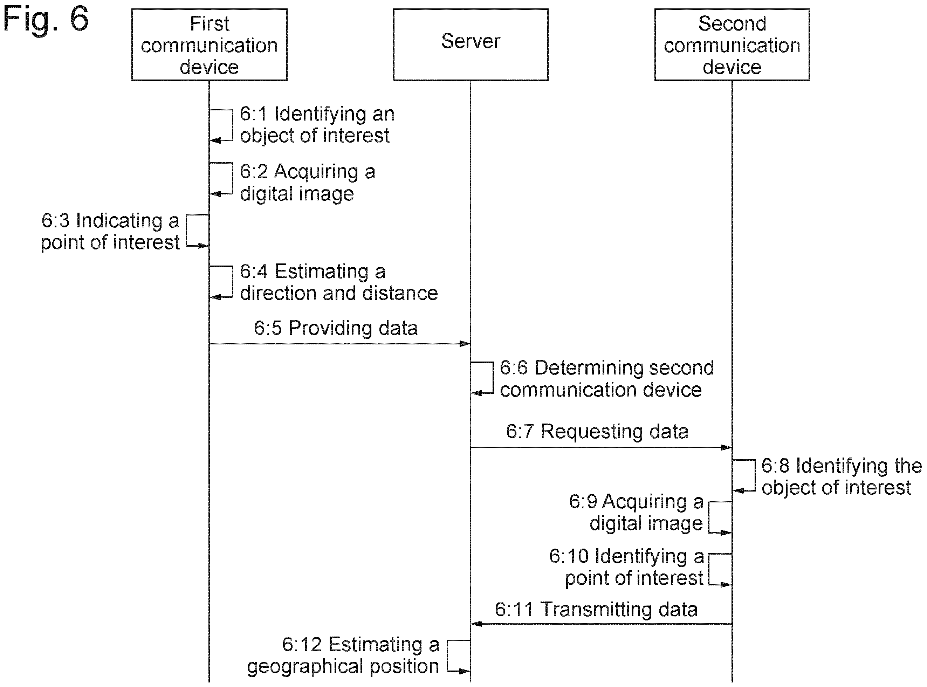

Yet another scenario will now be described with reference to Fig. 6. Again steps 6:1 - 6:3 corresponds to the three initial steps of the previous scenarios. However, in this scenario also the estimations of a relative distance and a direction are executed at the first communication device, as indicated with step 6:4. The estimates, possibly in combination with further data, acquired by the first communication device, is provided to the server in step 6:5. Steps 6:6 - 6:12 correspond to steps 5:6 - 5:12, respectively. The third scenario is preferred e.g. when the first communication device has sufficient capabilities for executing also the estimation process. It is to be understood that also all or just some of the communication devices, may be capable of estimating a geographical position and provide the estimated position to the first communication device or to the server, instead of providing an estimated relative distance and a direction, to be used for the estimate of the geographical position.

The additional data mentioned above, which can be acquired from a communication device, may comprise any type of data that can be captured by sensors of a communication device, a digital camera of the communication device, or entered to the communication device via a GUI of a respective communication device, and that can be relevant for the estimate of the geographical position. Such additional data may comprise e.g. topographic data, applicable to the digital map, from which an estimated difference of altitude between the first communication device and the point of interest can be derived. Alternatively, or in addition, a compass direction such as e.g. NSEW (North, South, East, West) compass direction, can be acquired and used as additional data. Such data may e.g. be acquired from a GPS receiver, capable of accessing information on geographical position and altitude, and accelerometers, capable of determining how the communication device is tilted.

In any of the scenarios described above, steps of the suggested method can be repeated so that additional data is provided to the first communication device from a second communication device or to a server from one or more of the first and the second communication devices, in order to strive for a more accurate estimate of a geographical position. In case parts of, or the whole method, is repeated, any or both of the first and the second communication device will receive instructions from a communication device or a server, instructing the respective communication device to take specific action and/or change certain parameters or settings of a respective communication device and/or digital camera, in order to be able to provide at least another digital image, or data, originating from a digital image. Alternatively, a communication device may be instructed to move according to a predetermined pattern, which may include movement in both horizontal and/or vertical direction or change of angle of the digital camera in relation to the object of interest.

Furthermore, although the scenarios described above all refers to a method involving two communication devices and possibly also a server, or another functional node, it is to be understood that, in addition to a first communication device, initiating or triggering the suggested method, and one additional communication device, a plurality of additional communication devices may contribute to the suggested method. In the latter situation, the requests for data will be repeated, such that corresponding data is also requested from all additional communication devices that can be determined.

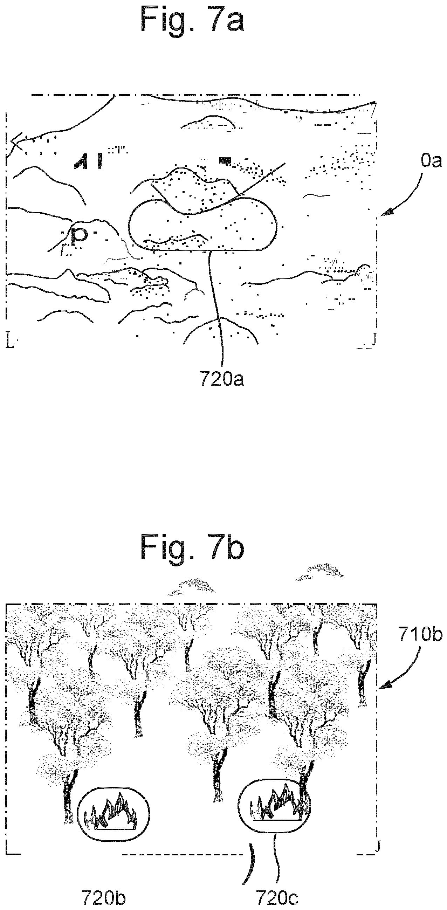

If the process mentioned above is repeated for a number of communication devices, instructions provided to one or more of the communication devices may also comprise a photo and/or a digital map, where estimated geographical positions form an area of interest, where such an area, when presented to a user, is representing an area within which an incident has been reported by one or more users, and, thus, where the user should try to identify the incident as well, when capturing and providing supplementary data. Presentation of an area of interest to a user can be seen as a way to highlight where a user is supposed to watch out for an incident. In a situation where the area of interest presented to a user is relatively large, such data may also indicate to the user that further data is needed, whereas repeated iterations between the communication devices and the device or node where further data is provided, possibly based on instructions, leading to data being provided from the same communication device but from different geographical positions and/or with varying quality, may result in a gradually reduced area of interest, as further data result in more reliable estimates. Figure 7a is illustrating a digital photo 710a, depicting a scenery with an area of interest 720a indicated, whereas Fig. 7b is illustrating a digital photo 710b, depicting a scenery with two areas of interests 720b, 720c. In case instructions provided to a communication device refer to change of parameters at the digital camera of a communication device, or the communication device, as such, these may either instruct the user of the communication device to execute the requested adaptations, or the instructions may automatically launch an adaptation, possibly after approval of the user of the communication device.

As already mentioned, various strategies may be applied when selecting one or more additional communication devices. Typically, photos captured from different horizontal angles around an object of interest will be preferred. Therefore, communication devices may be selected and determined more or less evenly spread around the object of interest. Particularly if one or more of the communication devices are capable of flying and moving more or less free around an object of interest, such as e.g. UAVs, one or more such communication devices may be selected for covering an object of interest from different altitudes. If communication devices are instead ground based, the topology may be considered for determining communication devices, located at different altitudes, especially if the terrain surrounding the object of interest is varying a lot in altitude. If visibility between communication devices and an object of interest can be determined, e.g. via local weather reports or by capturing sensor data, indicative of e.g. local visibility conditions, such considerations may also be relevant when determining suitable communication devices.

However, in a situation where a plurality of communication devices provides estimated geographical positions, or data which can be used for making such an estimation, a photo provided from the digital camera with the highest quality may be selected, if such information is known. The latter situation may be even more relevant in case a photo is taken under more difficult situations, such as e.g. towards a sunset. Various capabilities of the communication devices may be considered, especially if such capabilities effect the functionality of the app or function applied for the suggested estimations.

The estimation of a geographical position may be done in a number of alternative ways. According to one embodiment an estimate of the distance is made based on the content of a marked digital image, where the distance is estimated based on the following formula: Distance(mm)=(focal lenght(mm) * estimated object height(mm) * camera frame height in communication device)/(image height (pixels) * sensor height(mm)).

Where the focal length, the camera frame height in communication device, image height and sensor height are parameters which are specified for the respective camera, whereas the estimated object height of an object marked out by the user on the digital photo is an estimation of the height of the object of interest on the digital photo. Such an estimation may be done manually, such that a user is estimating if the object of interest, which may e.g. be a person in distress, is an adult or a child, and, based on that estimation, a length of e.g. 1,80 m or 1,30 m may be determined by the user. Alternatively, an automatic procedure may be executed for such an estimation, where e.g. an image recognition procedure may be applied for estimating the actual length of a person in distress, where a rough estimate may be set to 1,80 m in case the image recognition procedure determines that the person in distress is an adult, whereas an estimate of 1,30 m may be determined in case the person in distress is a child. Similarly, an object of interest which is estimated to be a car by an image recognition procedure may be estimated to have a height of 1,40 m. According to another embodiment, two digital photos, taken from the same digital camera after it has been moved in a certain direction and distance, may be used for estimating a distance, by applying so called single-camera stereo vision. One such method is e.g. disclosed in the conference paper "Measuring Distance with Mobile Phones Using Single-Camera Stereo Vision", Clemens Holzmann et al. June 2012, http://mint.fh-hagenberg.at/wp-content/uploads/2014/07/icdcsw2012_holzmann.pdf.

A direction from the user to the object of interest may be estimated by pointing the digital camera towards the object of interest, marking the object of interest on the digital photo and by determining the leaning of the communication device, based on accelerometers of the communication device.

Alternatively, a digital map may be applied where a user is marking out a point of interest on the map and, based on the geographical position of the user, both a direction to, and a distance between the user and the object of interest can be estimated automatically.

It is to be understood that also very rough estimates of a distance and direction may be very useful for estimating a geographical position, especially if estimates acquired from a number of different communication devices, located at different, distributed locations, relative the object of interest are combined as disclosed herein.

A communication device capable of estimating a geographical position of a point of interest, according to the method as described herein will now be described in further detail. The communication device is configured to acquire estimates of a first relative distance between, and a direction from a first communication device to the point of interest, wherein the estimates are based on data provided from the first communication device. The communication device is also configured to acquire complementary data, suitable for estimating a second relative distance between, and a second direction from at least one second communication device, to the point of interest, wherein the at least one second communication device has been determined based on the estimated first relative distance and direction, after which the communication device is configured to acquire an estimate of a geographical position of the point of interest, wherein the estimated geographical position is based on the estimates of the first relative distance and direction and the acquired complementary data. The mentioned procedure may be repeated arbitrary number of times in order to be able to gradually estimate a more accurate geographical position.

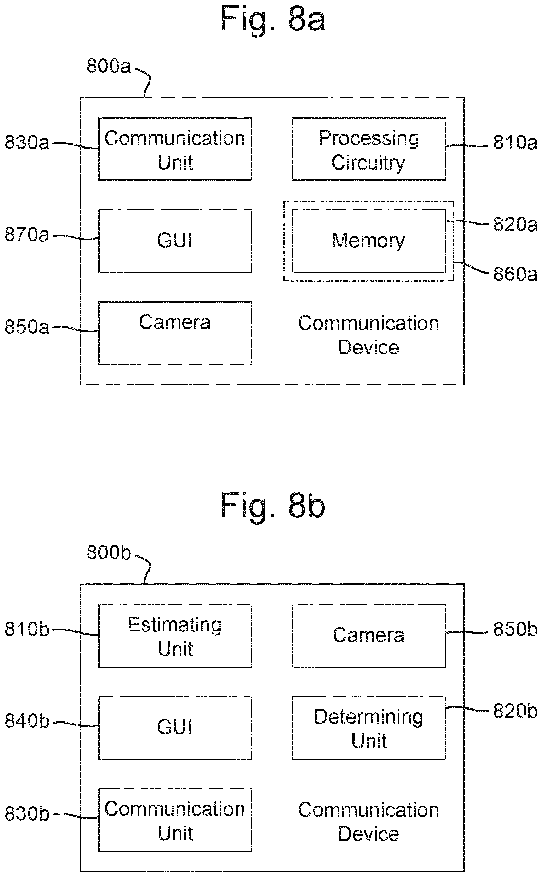

According to one embodiment, which is illustrated in Fig. 8a, the communication device 800a comprises processing circuitry 810a, and a memory 820a, where the memory comprises instructions, executable by the processing circuitry 810a, whereby the communication device 800a is operative to execute the functional steps mentioned above. Processing circuitry 810a may be provided using any combination of one or more suitable circuitry, such as e.g. a central processing unit (CPU), multiprocessor, microprocessor, digital signal processor (DSP), application specific integrated circuit (ASIC) or filed programmable gate array (FPGA). The communication device 800a comprises a communication unit 830a, allowing the communication device 800a to communicate with other entities via D2D communication, via an avail communication device 830a may be able to communicate with other communication devices, which are capable of participating in the mentioned estimation process, as disclosed herein, and/or with network nodes of a communication network, which may be e.g. a server, providing services or parts of services, which may be required for estimating a geographical position as disclosed herein.

The memory 820a, may be any combination of random-access memory (RAM) and/or read-only memory (ROM). The memory 820a typically also comprises persistent storage, which, for example, can be any single one or combination of magnetic memory, optical memory, solid-state memory or even remotely mounted memory. Parts of the memory, usable by the communication device 800a may be configured a as a computer program product 860a.

The computer program product 860a may be configured e.g. as an optical disc, such as e.g. a CD (compact disc), a DVD (Digital Versatile Disc) or a Blu-Ray disc. Alternatively, it may be arranged as a removable solid-state memory, e.g. in the form of a USB (Universal Serial Bus).

The communication device 800a typically also comprise a Graphic User Interface (GUI), which enables a user of the communication device to interact with the app of function as described herein. More specifically, the GUI may allow a user to respond to instructions, which may include questions, to mark a point of interest on a digital image, presented on a display (not shown) of the communication device 800a. In addition, the communication device 800a comprises a digital camera 850a, capable of capturing digital images or photos, on which the user of the communication device 800a can mark a point of interest via the GUI 870a.

According to an alternative embodiment, functionality mentioned above is instead defined as various functional units or modules, which are configured to interact with each other, in order to provide the functionality as described herein, and which are constructed as circuitry, according to any of the alternatives mentioned above, or according to any other means for arranging this type of functionality. More specifically, a communication device 800b comprises an estimating unit 810b, which is configured to estimate a first relative distance between, and a direction from a first communication device to a point of interest, where these estimates are based on data provided from the first communication device.

A communication unit 830b is configured to acquire complementary data, suitable for estimating a second relative distance between, and a second direction from at least one second communication device to the point of interest, wherein the at least one second communication device has been determined based on the estimated first relative distance and direction.

The estimating unit 810b, or a second estimating unit (not shown) separate from estimating unit 810b, is configured to acquire an estimate of a geographical position of the point of interest, wherein this estimate is based on the estimates of the first relative distance and direction in combination with the acquired complementary data.

A determining unit 820b is configured to determine one or more second communication devices, as disclosed herein. Furthermore, also communication device 800b comprise a communication unit 830b, a GUI 840b and a camera 850b, where these functional units are capable of operating as described above, when contributing for estimating a geographical position. A communication device 800b which is operating e.g. as an autonomous device, may however not be provided with a GUI 840b.

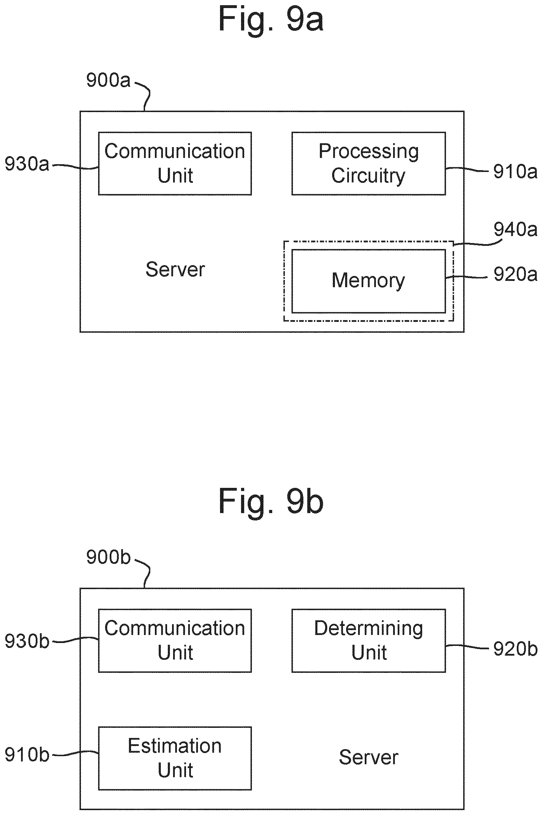

In case the functionality mentioned herein is instead executed on a network node, such as e.g. a server, or any other entity operating as a server, the communication device 900a as disclosed herein may, according to one embodiment, be configured as disclosed in Fig. 9a, where a processing circuitry 910a is configured to interact with memory 920a, a communication unit 930a, and possibly also a computer program product 940a.

Alternatively a server 900b, capable of estimating a geographical position, as described herein, may be defined as a device, comprising a plurality of functional units or modules, comprising an estimation unit 910b, configured to make required estimations, a determining unit 920b, for determining second communication devices, and a communication unit 930b, configured to enable communication between the server 900b and communication devices 800a,800b.

A communication device, such as device 900a, 900b rely on receiving estimated distance and direction, or data, from which such measures can be estimated, from another communication device, such as communication device 800a, 800b, since communication device 900a, 900b will not be able to capture digital images of an object of interest on its own, but may have excessive computation capabilities and reliable power sources, making such an embodiment a preferred choice as long as access to participating communication devices can be achieved.

Although the computer program products 860a, 940a are illustrated as comprising all respective memory 820a, 920a in figure 8a or 9a, it is to be understood that typically parts of the memory 820a, 820a forms part of the respective communication device 800a, 900a whereas other parts form part of the computer program product 860a, 940a, where the different memory sections are capable of interacting with each other and the respective processing circuitry 810a, 910a.

It is to be understood that the exemplary devices, presented above, typically also will comprise other functional entities, such as e.g. power source, a display, various measuring sensors etc. which have all been omitted from this document, since they are not considered as essential to the scope of the invention and since omitted functional entities are considered to be used in a conventional and well known manner.

The communication device 800a,800b,900a,900b is configured to acquire estimates of a first relative distance, direction and complementary data by way of acquiring a digital image, identifying an object of interest and marking the object of interest as a point of interest on the digital image, acquiring data associated with the digital image, and estimating a relative distance and direction by processing image data of the digital image and the acquired data, according to any suitable estimation procedure.

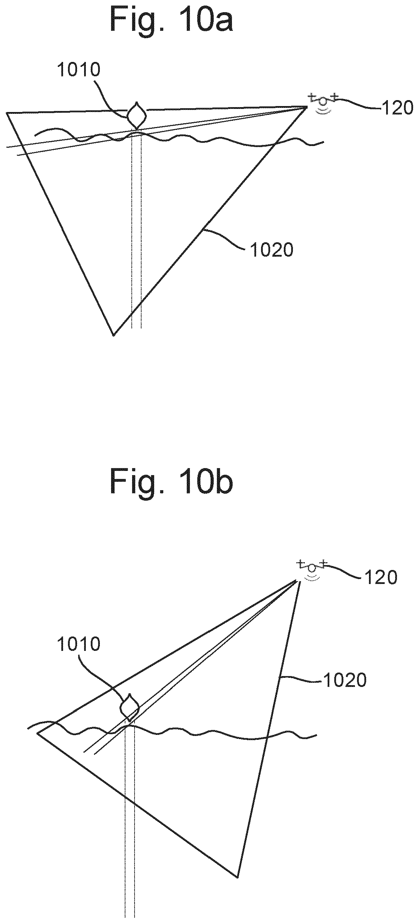

There are situations, e.g. where a waste area needs to be surveilled, such as e.g. during firefighting, when a communication device 800a,800b preferably is incorporated into a UAV or any other type of autonomous or semi-autonomous vehicle. In addition to being able to survey vast areas in an efficient way, making use of surveillance from a varying altitude is also advantageous. Given a fixed uncertainty and error in distance estimation, due to that proper distance to an object is typically harder to estimate than the direction or bearing, an increased flight altitude is often beneficial in a field of view based positioning purpose, since distance-error scales negatively with respect to lower altitude as illustrated in the two different scenarios of Fig 10a and 10b, respectively. As indicated in the two mentioned figures, a few UAVs cooperating when estimating a geographical position, may provide a more precise estimate by increasing their altitude and thereby also improving the chances of good eye of sight. With higher flight altitudes, the associated uncertainty in estimated distance to an object will decrease, whereas the accuracy of the area of interest, and finally the estimated geographical position, will increase.

However, due to power consumption, it may not be a preferred solution for a UAV to move to a remote area, after having discovered e.g. a forest fire from above, but instead to make a best effort estimation of a distance and direction to a point of interest, to report the estimates to a central server, or another UAV, which may act as a temporary access node or base station, so that additional, geographically distributed communication devices in the air, on ground or both, can contribute to the initiated estimation process.

It should be noted that the above-mentioned examples illustrate rather than limit the invention, and that those skilled in the art will be able to design many alternative examples without departing from the scope of the appended claims. The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e. the first or second of such features to occur in time or space) unless explicitly stated otherwise. Steps in the methods disclosed herein may be carried out in any order unless expressly otherwise stated. Any reference signs in the statements shall not be construed so as to limit their scope.

## Claims

1. A method for estimating a geographical position of a point of interest, the method comprising:
- marking (340) a point of interest on an identified (310) object of interest on a digital image, acquired (330) by the first communication device;
- acquiring (350), by processing image data of the digital image, estimates of a first relative distance between, and a direction from the first communication device to the point of interest, by estimating the height of the object of interest;
- acquiring (370) complementary data, suitable for estimating at least one second relative distance between, and a second direction from a respective second communication device to the point of interest, wherein the at least one second communication device has been determined (360) based on the estimated first relative distance and direction, and
- acquiring (380) an estimate of a geographical position of the point of interest, based on the estimates of the first relative distance and direction and the acquired complementary data.

2. A communication device (800a, 800b, 900a, 900b) capable of estimating a geographical position of a point of interest, the communication device (800a,800b, 900a, 900b) being configured to:
- mark a point of interest on an identified object of interest on a digital image, acquired by the first communication device;
- acquire, by processing image data of the digital image, estimates of a first relative distance between, and a direction from the first communication device to the point of interest, by estimating the height of the object of interest;
- acquire complementary data, suitable for estimating at least one second relative distance between, and a second direction from a respective second communication device to the point of interest, wherein the at least one second communication device has been determined based on the estimated first relative distance and direction, and
- acquire an estimate of a geographical position of the point of interest, based on the estimates of the first relative distance and direction and the acquired complementary data.

3. The communication device (800a, 800b, 900a, 900b) according to claim 2, wherein the digital image is one or both of a digital photograph and a digital map.

4. The communication device according to claim 3, further configured to estimate the relative distance and direction based on a combination of image data of a digital photo and a digital map.

5. The communication device (800a, 800b, 900a, 900b) according to any of claims 2-4, further configured to determine the object of interest by applying image recognition.

6. The communication device (800a, 800b, 900a, 900b) according to any of claims 2-5, further configured to provide, to at least the at least one determined second communication device, instructions, requesting a user of the at least one second communication device to acquire and provide said complementary data.

7. The communication device (800a, 800b, 900a, 900b) according to claim 6, further configured to provide instructions, wherein the instructions comprise at least one of:
- instructions, instructing the at least one second communication device to acquire and provide complementary data when it is adapting parameters effecting the quality of the captured complementary data, and
- instructions, instructing the at least one second communication device to acquire and provide complementary data when it is being moved according to a predefined pattern.

8. The communication device (800a, 800b, 900a, 900b) according to any of claims 6 or 7, further configured to:
- provide further instructions to at least one of the first communication device and the at least one second communication device on how to acquire further complementary data, and
- generate a further estimate of a geographical position of the point of interest, based on available estimates of relative distances and directions.

9. The communication device (800a, 800b, 900a, 900b) according to claim 7 or 8, wherein the communication device (800a, 800b, 900a, 900b) is further configured to move according to a predefined pattern which comprise predefined movements in relation to the point of interest according to at least one of: geographic direction, altitude and angle.

10. The communication device (800a, 800b, 900a, 900b) according to any of claims 7, 8 or 9, wherein the adapted parameters comprise parameters decisive of the quality of the digital image.

11. The communication device (800a, 800b, 900a, 900b) according to any of claims 2-10, further configured to present to at least one of the first communication device and the at least one second communication device, the point of interest in a digital image on a display of the respective communication device.

12. The communication device (800a, 800b, 900a, 900b) according to claim 11, further configured to:
- determine an area of interest, representing an area encircling the acquired at least one estimate of the geographical position of the point of interest, and
- provide, as part of the instructions provided to at least one of the first communication device and the at least one second communication device, an instruction, informing the communication device or a user of the respective communication device of the area of interest.

13. The communication device (800a, 800b, 900a, 900b) according to any of claims 2-12, further configured to acquire data provided from the first communication device and/or complementary data provided from the at least one second communication device, comprising at least one of:
- image data captured with a digital camera of the respective communication device, wherein the image data comprise an object of interest;
- an estimated relative distance between and direction to the point of interest and the respective communication device;
- data indicating altitude of the respective communication device with respect to the point of interest, and
- data indicating the geographical position of the respective communication device.

14. The communication device (800a, 800b, 900a, 900b) according to any of claims 2-13, further configured to determine the at least one second communication device based on at least one of:
- the quality of a digital camera of the at least one second communication device;
- the capabilities of the at least one second communication device;
- the geographical location of the at least one second communication device;
- the altitude of the at least one second communication device;
- the topology of the area in which the first communication device, the at least one second communication device and the point of interest are located;
- the estimated visibility between the at least one second communication device and the point of interest;

15. The communication device (800a, 800b, 900a, 900b) according to any claims 2 -14, further configured to estimate the geographical position by executing any of:
- combining all relative distances and directions acquired by the first and the second communication device, and
- selectively combining relative distances and directions according to predefined selection criteria.

16. A computer program for controlling a communication device (800a,900a)
capable of estimating a geographical position of a point of interest, the computer program comprising computer code which, when run on processing circuitry (810a, 910a) of the communication device (800a,900a) causes the communication device (800a,900a) to:
- acquire estimates of a first relative distance between, and a direction from a first communication device to the point of interest, wherein said estimates are based on data provided from the first communication device;
- acquire complementary data, suitable for estimating a second relative distance between, and a second direction from at least one second communication device to the point of interest, wherein the at least one second communication device has been determined based on the estimated first relative distance and direction;
- acquire an estimate of a geographical position of the point of interest, wherein said estimate is based on the estimates of the first relative distance and direction and the acquired complementary data.

17. A computer program product (840a, 940a) comprising a computer program according to claim 16, and a computer readable storage medium on which the computer program is stored.

18. A carrier containing the computer program of claim 16, wherein the carrier is one of an electronic signal, an optical signal, a radio signal, and a computer readable storage medium.

## Patentansprüche

1. Verfahren zur Schätzung einer geografischen Position eines Punktes von Interesse, wobei das Verfahren umfasst:
- Markieren (340) eines Punktes von Interesse auf einem identifizierten (310) Objekt von Interesse auf einem digitalen Bild, das von der ersten Kommunikationsvorrichtung (330) erfasst wurde;
- Erfassen (350), durch Verarbeiten von Bilddaten, von Schätzungen einer ersten relativen Distanz und einer Richtung von der ersten Kommunikationsvorrichtung zu dem Punkt von Interesse durch Schätzen der Höhe des Objekts von Interesse;
- Erfassen (370) von ergänzenden Daten, die zum Schätzen mindestens einer zweiten relativen Distanz und einer zweiten Richtung von einer jeweiligen zweiten Kommunikationsvorrichtung zu dem Punkt von Interesse geeignet sind, wobei die mindestens eine zweite Kommunikationsvorrichtung basierend auf der geschätzten ersten relativen Distanz und Richtung bestimmt wurde (360), und
- Erfassen (380) einer Schätzung einer geografischen Position des Punktes von Interesse basierend auf den Schätzungen der ersten relativen Distanz und Richtung sowie den erfassten ergänzenden Daten.

2. Kommunikationsvorrichtung (800a, 800b, 900a, 900b), die zum Schätzen einer geografischen Position eines Punktes von Interesse imstande ist, wobei die Kommunikationsvorrichtung (800a, 800b, 900a, 900b) konfiguriert ist zum:
- Markieren eines Punktes von Interesse auf einem identifizierten Objekt von Interesse auf einem digitalen Bild, das von der ersten Kommunikationsvorrichtung erfasst wurde;
- Erfassen, durch Verarbeiten von Bilddaten, von Schätzungen einer ersten relativen Distanz und einer Richtung von der ersten Kommunikationsvorrichtung zu dem Punkt von Interesse durch Schätzen der Höhe des Objekts von Interesse;
- Erfassen von ergänzenden Daten, die zum Schätzen mindestens einer zweiten relativen Distanz und einer zweiten Richtung von einer jeweiligen zweiten Kommunikationsvorrichtung zu dem Punkt von Interesse geeignet sind, wobei die mindestens eine zweite Kommunikationsvorrichtung basierend auf der geschätzten ersten relativen Distanz und Richtung bestimmt wurde, und
- Erfassen einer Schätzung einer geografischen Position des Punktes von Interesse basierend auf den Schätzungen der ersten relativen Distanz und Richtung sowie den erfassten ergänzenden Daten.

3. Kommunikationsvorrichtung (800a, 800b, 900a, 900b) nach Anspruch 2, wobei das digitale Bild eines oder beides von einer digitalen Fotografie und einer digitalen Karte ist.

4. Kommunikationsvorrichtung nach Anspruch 3, ferner konfiguriert zum Schätzen der relativen Distanz und Richtung basierend auf einer Kombination von Bilddaten eines digitalen Fotos und einer digitalen Karte.

5. Kommunikationsvorrichtung (800a, 800b, 900a, 900b) nach einem der Ansprüche 2 bis 4, ferner konfiguriert zum Bestimmen des Objekts von Interesse durch Anwenden von Bilderkennung.

6. Kommunikationsvorrichtung (800a, 800b, 900a, 900b) nach einem der Ansprüche 2 bis 5, ferner konfiguriert zum Bereitstellen von Anweisungen für zumindest die mindestens eine bestimmte zweite Kommunikationsvorrichtung und Auffordern eines Benutzers der mindestens einen zweiten Kommunikationsvorrichtung zum Erfassen und Bereitstellen der ergänzenden Daten.

7. Kommunikationsvorrichtung (800a, 800b, 900a, 900b) nach Anspruch 6, ferner konfiguriert zum Bereitstellen von Anweisungen, wobei die Anweisungen mindestens eines umfassen von:
- Anweisungen, die die mindestens eine zweite Kommunikationsvorrichtung zum Erfassen und Bereitstellen von ergänzenden Daten anweisen, wenn sie Parameter anpasst, die die Qualität der erfassten ergänzenden Daten beeinflussen, und
- Anweisungen, die die mindestens eine zweite Kommunikationsvorrichtung zum Erfassen und Bereitstellen von ergänzenden Daten anweisen, wenn sie gemäß einem vordefinierten Muster bewegt wird.

8. Kommunikationsvorrichtung (800a, 800b, 900a, 900b) nach einem der Ansprüche 6 oder 7, ferner konfiguriert zum:
- Bereitstellen weiterer Anweisungen für mindestens eine der ersten Kommunikationsvorrichtung und der mindestens einen zweiten Kommunikationsvorrichtung bezüglich dessen, wie weitere ergänzende Daten zu erfassen sind, und
- Erzeugen einer weiteren Schätzung einer geografischen Position des Punktes von Interesse basierend auf verfügbaren Schätzungen relativer Distanzen und Richtungen.

9. Kommunikationsvorrichtung (800a, 800b, 900a, 900b) nach Anspruch 7 oder 8, wobei die Kommunikationsvorrichtung (800a, 800b, 900a, 900b) ferner so konfiguriert ist, dass sie sich gemäß einem vordefinierten Muster bewegt, das vordefinierte Bewegungen in Bezug auf den Punkt von Interesse gemäß mindestens einem von Folgendem umfasst: geografische Richtung, Höhe und Winkel.

10. Kommunikationsvorrichtung (800a, 800b, 900a, 900b) nach Anspruch 7, 8 oder 9, wobei die angepassten Parameter Parameter umfassen, die für die Qualität des digitalen Bildes entscheidend sind.

11. Kommunikationsvorrichtung (800a, 800b, 900a, 900b) nach einem der Ansprüche 2 bis 10, ferner konfiguriert zum Darstellen des Punktes von Interesse für mindestens eine der ersten Kommunikationsvorrichtung und der mindestens einen zweiten Kommunikationsvorrichtung in einem digitalen Bild auf einer Anzeige der jeweiligen Kommunikationsvorrichtung.

12. Kommunikationsvorrichtung (800a, 800b, 900a, 900b) nach Anspruch 11, ferner konfiguriert zum:
- Bestimmen eines Bereichs von Interesse, der einen Bereich darstellt, der die erfasste mindestens eine Schätzung der geografischen Position des Punkts von Interesse umgibt, und
- Bereitstellen einer Anweisung als Teil der für die mindestens eine der ersten Kommunikationsvorrichtung und der mindestens einen zweiten Kommunikationsvorrichtung bereitgestellten Anweisungen und Informieren der Kommunikationsvorrichtung oder eines Benutzers der Kommunikationsvorrichtung über den Bereich von Interesse.

13. Kommunikationsvorrichtung (800a, 800b, 900a, 900b) nach einem der Ansprüche 2 bis 12, ferner konfiguriert zum Erfassen von Daten, die von der ersten Kommunikationsvorrichtung bereitgestellt werden, und/oder von ergänzenden Daten, die von der mindestens einen zweiten Kommunikationsvorrichtung bereitgestellt werden, umfassend mindestens eines von:
- Bilddaten, die mit einer Digitalkamera der jeweiligen Kommunikationsvorrichtung erfasst werden, wobei die Bilddaten ein Objekt von Interesse umfassen;
- einer geschätzten relativen Distanz und Richtung von dem Punkt von Interesse zur jeweiligen Kommunikationsvorrichtung;
- Daten, die eine Höhe der jeweiligen Kommunikationsvorrichtung in Bezug auf den Punkt von Interesse anzeigen, und
- Daten, die die geografische Position der jeweiligen Kommunikationsvorrichtung anzeigen.

14. Kommunikationsvorrichtung (800a, 800b, 900a, 900b) nach einem der Ansprüche 2 bis 13, ferner konfiguriert zum Bestimmen der mindestens einen zweiten Kommunikationsvorrichtung basierend auf mindestens einem von:
- der Qualität der Digitalkamera der mindestens einen zweiten Kommunikationsvorrichtung;
- den Fähigkeiten der mindestens einen zweiten Kommunikationsvorrichtung;
- dem geografischen Standort der mindestens einen zweiten Kommunikationsvorrichtung;
- der Höhe der mindestens einen zweiten Kommunikationsvorrichtung;
- der Topologie des Bereichs, in dem sich die erste Kommunikationsvorrichtung, die mindestens eine zweite Kommunikationsvorrichtung und der Punkt von Interesse befinden;
- der geschätzten Sichtbarkeit zwischen der mindestens einen zweiten Kommunikationsvorrichtung und dem Punkt von Interesse.

15. Kommunikationsvorrichtung (800a, 800b, 900a, 900b) nach einem der Ansprüche 2 bis 14, ferner konfiguriert zum Schätzen der geografischen Position durch Ausführen von einem von Folgendem:
- Kombinieren aller relativen Distanzen und Richtungen, die durch die erste und die zweite Kommunikationsvorrichtung erfasst werden, und
- selektivem Kombinieren relativer Distanzen und Richtungen gemäß vordefinierten Auswahlkriterien.

16. Computerprogramm zum Steuern einer Kommunikationsvorrichtung (800a, 900a), die zum Schätzen einer geografischen Position eines Punktes von Interesse imstande ist, wobei das Computerprogramm Computercode umfasst, der bei Ausführung auf Verarbeitungsschaltungsanordnung (810a, 910a) der Kommunikationsvorrichtung (800a, 900a) die Kommunikationsvorrichtung (800a, 900a) veranlasst zum:
- Erfassen von Schätzungen einer ersten relativen Distanz und einer Richtung von einem ersten Kommunikationsvorrichtung zu dem Punkt von Interesse, wobei die Schätzungen auf Daten basieren, die von der ersten Kommunikationsvorrichtung bereitgestellt werden;
- Erfassen von ergänzenden Daten, die zum Schätzen einer zweiten relativen Distanz und einer zweiten Richtung von mindestens einer zweiten Kommunikationsvorrichtung zu dem Punkt von Interesse geeignet sind, wobei die mindestens eine zweite Kommunikationsvorrichtung basierend auf der geschätzten ersten relativen Distanz und Richtung bestimmt wurde, und
- Erfassen einer Schätzung einer geografischen Position des Punktes von Interesse, wobei die Schätzung auf den Schätzungen der ersten relativen Distanz und Richtung sowie den erfassten ergänzenden Daten basiert.

17. Computerprogrammprodukt (840a, 940a), umfassend ein Computerprogramm nach Anspruch 16 und ein computerlesbares Speichermedium, auf dem das Computerprogramm gespeichert ist.

18. Datenträger, der das Computerprogramm nach Anspruch 16 enthält, wobei der Datenträger eines von einem elektronischen Signal, einem optischen Signal, einem Funksignal und einem computerlesbaren Speichermedium ist.

## Revendications

1. Procédé d'estimation d'une position géographique d'un point d'intérêt, le procédé comprenant :
- le marquage (340) d'un point d'intérêt sur un objet d'intérêt identifié (310) sur une image numérique acquise (330) par le premier dispositif de communication ;
- l'acquisition (350), par le traitement de données d'image de l'image numérique, d'estimations d'une première distance relative entre le premier dispositif de communication et le point d'intérêt et d'une direction du premier dispositif de communication au point d'intérêt, par l'estimation de la hauteur de l'objet d'intérêt ;
- l'acquisition (370) de données complémentaires, appropriées pour estimer au moins une deuxième distance relative entre un deuxième dispositif de communication respectif et le point d'intérêt et une deuxième direction du deuxième dispositif de communication respectif au point d'intérêt, dans lequel l'au moins un deuxième dispositif de communication a été déterminé (360) sur la base de la première distance relative estimée et de la première direction estimée, et
- l'acquisition (380) d'une estimation d'une position géographique du point d'intérêt, sur la base des estimations de la première distance relative et de la première direction et des données complémentaires acquises.

2. Dispositif de communication (800a, 800b, 900a, 900b) capable d'estimer une position géographique d'un point d'intérêt, le dispositif de communication (800a, 800b, 900a, 900b) étant configuré pour :
- marquer un point d'intérêt sur un objet d'intérêt identifié sur une image numérique acquise par le premier dispositif de communication ;
- acquérir, par le traitement de données d'image de l'image numérique, des estimations d'une première distance relative entre le premier dispositif de communication et le point d'intérêt et d'une direction du premier dispositif de communication au point d'intérêt, par l'estimation de la hauteur de l'objet d'intérêt ;
- acquérir des données complémentaires, appropriées pour estimer au moins une deuxième distance relative entre un deuxième dispositif de communication respectif et le point d'intérêt et une deuxième direction du deuxième dispositif de communication respectif au point d'intérêt, dans lequel l'au moins un deuxième dispositif de communication a été déterminé sur la base de la première distance relative estimée et de la première direction estimée, et
- acquérir une estimation d'une position géographique du point d'intérêt, sur la base des estimations de la première distance relative et de la première direction et des données complémentaires acquises.

3. Dispositif de communication (800a, 800b, 900a, 900b) selon la revendication 2, dans lequel l'image numérique est l'une ou les deux d'une photographie numérique et d'une carte numérique.

4. Dispositif de communication selon la revendication 3, configuré en outre pour estimer la distance relative et la direction sur la base d'une combinaison de données d'image d'une photo numérique et d'une carte numérique.

5. Dispositif de communication (800a, 800b, 900a, 900b) selon l'une quelconque des revendications 2 à 4, configuré en outre pour déterminer l'objet d'intérêt par l'application d'une reconnaissance d'image.

6. Dispositif de communication (800a, 800b, 900a, 900b) selon l'une quelconque des revendications 2 à 5, configuré en outre pour fournir, à au moins l'au moins un deuxième dispositif de communication déterminé, des instructions demandant à un utilisateur de l'au moins un deuxième dispositif de communication d'acquérir et de fournir lesdites données complémentaires.

7. Dispositif de communication (800a, 800b, 900a, 900b) selon la revendication 6, configuré en outre pour fournir des instructions, dans lequel les instructions comprennent au moins l'une parmi :
- des instructions instruisant à l'au moins un deuxième dispositif de communication d'acquérir et de fournir des données complémentaires lorsqu'il adapte des paramètres affectant la qualité des données complémentaires capturées, et
- des instructions instruisant à l'au moins un deuxième dispositif de communication d'acquérir et de fournir des données complémentaires lorsqu'il est déplacé selon un motif prédéfini.

8. Dispositif de communication (800a, 800b, 900a, 900b) selon la revendication 6 ou 7, configuré en outre pour :
- fournir d'autres instructions à au moins l'un du premier dispositif de communication et de l'au moins un deuxième dispositif de communication sur la manière d'acquérir d'autres données complémentaires, et
- générer une autre estimation d'une position géographique du point d'intérêt sur la base d'estimations disponibles de distances relatives et de directions.

9. Dispositif de communication (800a, 800b, 900a, 900b) selon la revendication 7 ou 8, dans lequel le dispositif de communication (800a, 800b, 900a, 900b) est en outre configuré pour se déplacer selon un motif prédéfini comprenant des mouvements prédéfinis par rapport au point d'intérêt en fonction d'au moins l'un parmi : une direction géographique, une altitude et un angle.

10. Dispositif de communication (800a, 800b, 900a, 900b) selon la revendication 7, 8 ou 9, dans lequel les paramètres adaptés comprennent des paramètres décidant de la qualité de l'image numérique.

11. Dispositif de communication (800a, 800b, 900a, 900b) selon l'une quelconque des revendications 2 à 10, configuré en outre pour présenter, à au moins l'un du premier dispositif de communication et de l'au moins un deuxième dispositif de communication, le point d'intérêt dans une image numérique sur un affichage du dispositif de communication respectif.

12. Dispositif de communication (800a, 800b, 900a, 900b) selon la revendication 11, configuré en outre pour :
- déterminer une zone d'intérêt, représentant une zone encerclant l'au moins une estimation acquise de la position géographique du point d'intérêt, et
- fournir, dans le cadre des instructions fournies à au moins l'un du premier dispositif de communication et de l'au moins un deuxième dispositif de communication, une instruction informant le dispositif de communication ou un utilisateur du dispositif de communication respectif de la zone d'intérêt.

13. Dispositif de communication (800a, 800b, 900a, 900b) selon l'une quelconque des revendications 2 à 12, configuré en outre pour acquérir des données fournies depuis le premier dispositif de communication et/ou des données complémentaires fournies depuis l'au moins un deuxième dispositif de communication, comprenant au moins l'une parmi :
- des données d'image capturées avec une caméra numérique du dispositif de communication respectif, dans lequel les données d'image comprennent un objet d'intérêt ;
- une distance relative estimée entre le point d'intérêt et le dispositif de communication respectif et une direction estimée du point d'intérêt au dispositif de communication respectif ;
- des données indiquant une altitude du dispositif de communication respectif par rapport au point d'intérêt, et
- des données indiquant la position géographique du dispositif de communication respectif.

14. Dispositif de communication (800a, 800b, 900a, 900b) selon l'une quelconque des revendications 2 à 13, configuré en outre pour déterminer l'au moins un deuxième dispositif de communication sur la base d'au moins l'un parmi :
- la qualité d'une caméra numérique de l'au moins un deuxième dispositif de communication ;
- les capacités de l'au moins un deuxième dispositif de communication ;
- l'emplacement géographique de l'au moins un deuxième dispositif de communication ;
- l'altitude de l'au moins un deuxième dispositif de communication ;
- la topologie de la zone dans laquelle le premier dispositif de communication, l'au moins un deuxième dispositif de communication et le point d'intérêt sont situés ;
- la visibilité estimée entre l'au moins un deuxième dispositif de communication et le point d'intérêt.

15. Dispositif de communication (800a, 800b, 900a, 900b) selon l'une quelconque des revendications 2 à 14, configuré en outre pour estimer la position géographique par l'exécution de l'une quelconque parmi :
- la combinaison de toutes les distances relatives et de toutes les directions acquises par les premier et deuxième dispositifs de communication, et
- la combinaison sélectivement de distances relatives et de directions selon des critères de sélection prédéfinis.

16. Programme informatique pour commander un dispositif de communication (800a, 900a) capable d'estimer une position géographique d'un point d'intérêt, le programme informatique comprenant un code informatique qui, lorsqu'il est exécuté sur une circuiterie de traitement (810a, 910a) du dispositif de communication (800a, 900a) amène le dispositif de communication (800a, 900a) à :
- acquérir des estimations d'une première distance relative entre un premier dispositif de communication et le point d'intérêt et d'une direction du premier dispositif de communication au point d'intérêt, dans lequel lesdites estimations sont basées sur des données fournies depuis le premier dispositif de communication ;
- acquérir des données complémentaires, appropriées pour estimer une deuxième distance relative entre au moins un deuxième dispositif de communication respectif et le point d'intérêt et une deuxième direction de l'au moins un deuxième dispositif de communication respectif au point d'intérêt, dans lequel l'au moins un deuxième dispositif de communication a été déterminé sur la base de la première distance relative estimée et de la première direction estimée ;
- acquérir une estimation d'une position géographique du point d'intérêt, dans lequel ladite estimation est basée sur les estimations de la première distance relative et de la première direction et les données complémentaires acquises.

17. Produit programme informatique (840a, 940a) comprenant un programme informatique selon la revendication 16, et un support de stockage lisible par ordinateur sur lequel le programme informatique est stocké.

18. Support contenant le programme informatique selon la revendication 16, dans lequel le support est l'un parmi un signal électronique, un signal optique, un signal radio et un support de stockage lisible par ordinateur.
